# EUROPÄISCHE PATENTANMELDUNG

(11) **EP 0 763 442 A2**
(43) Veröffentlichungstag der Anmeldung: **19.03.1997**
(21) Anmeldenummer: 96113598.5
(22) Anmeldetag: 24.08.1996
(51) Int. Cl.: B60K 20/04, F16H 59/06

(54) **Pedalsteuerung für ein Flurförderzeug**

(30) Priorität: 16.09.1995 DE 19534414
(71) Anmelder: Jungheinrich Aktiengesellschaft, D-22047 Hamburg (DE)
(72) Erfinder: Löding, Herbert, 24568 Kaltenkirchen (DE)
(74) Vertreter: Patentanwälte Hauck, Graalfs, Wehnert, Döring, Siemons

(57) **Zusammenfassung**

Pedalsteuerung für ein Flurförderzeug, mit zwei gegenläufig gekoppelten Pedalen, wobei beim Herunterdrücken des einen Pedals ein Stellsignal für die Vorwärtsfahrt und beim Herunterdrücken des anderen Pedals ein Stellsignal für die Rückwärtsfahrt erzeugt wird, wobei jedes Pedal auf einen Hydraulikzylinder wirkt, die Hydraulikzylinder hydraulisch gekoppelt sind, ein Pedal mit einem Stellsignalgeber zusammenwirkt und eine Federanordnung vorgesehen ist, die die Pedale in nicht betätigtem Zustand in Nullstellung bringt.

## Beschreibung

Die Erfindung bezieht sich auf eine Pedalsteuerung für ein Flurförderzeug nach dem Oberbegriff des Patentanspruchs 1.

Es ist für Flurförderzeuge bekannt, das Geschwindigkeitssignal für den Antrieb mit Hilfe eines Pedals zu erzeugen. Wird ein Fahrtrichtungsgeber vorgesehen, der z.B. von Hand betätigt werden kann, kann ein einziges Pedal für beide Fahrtrichtungen eingesetzt werden. Häufig werden jedoch auch sog. Doppelpedalsteuerungen vorgesehen, d.h. für jede Fahrtrichtung ein Pedal.

Aus der DE 15 30 836 ist eine derartige Doppelfahrpedalsteuerung bekannt geworden. Auf der Schwenkachse jedes Fahrpedals ist ein Zahnrad angeordnet, wobei die Zahnräder miteinander kämmen. Ein Fahrpedal ist über ein Gestänge mit einem entsprechenden Stellgeber für eine hydraulische Pumpe verbunden. Durch Betätigung des anderen Pedals wird gleichzeitig das erstere gegensinnig mitverschwenkt zwecks Erzeugung eines Fahrsignals. An die Präzision der Zahnräder sind keine besonders hohen Anforderungen zu stellen. Falls keine besonderen Vorkehrungen getroffen werden, ist jedoch nicht sichergestellt, daß die Auslenkung beider Fahrpedale um einen gleichen Winkel zu einem gleich großen Stellsignal (wenn auch in entgegengesetzter Fahrtrichtung) führt. Die beschriebene Kopplung der Fahrpedale hat ferner den Nachteil, daß sie eine bestimmte räumliche Anordnung aufweisen müssen, damit die Kopplung über die Zahnräder verwirklichbar ist. Dadurch kommt es unter Umständen zu einer platzraubenden Konstruktion.

Aus der DE 28 14 741 ist die Kopplung von Pedalen bei einem Flurförderzeug bekanntgeworden, die über einen zweiarmigen am Fahrzeug schwenkbar gelagerten Hebel erfolgt, wobei mit den Pedalen verbundene Arme über jeweils ein Kugelgelenk an den zweiarmigen Hebel angelenkt sind. Auch diese Pedalsteuerung erfordert eine festgelegte Anordnung des zweiarmigen Hebels zwischen den Pedalen. Die bekannte Pedalsteuerung ist indessen nicht für eine Doppelfahrpedalsteuerung vorgesehen, sondern für eine Einpedalsteuerung, wobei zusätzlich zwei trennbare Kupplungen vorgesehen sind, damit über ein einziges Fahrpedal mit Fahrtrichtungsvorwahlgeber die Fahrsteuerung des Flurförderzeugs bewerkstelligt werden kann.

Der Erfindung liegt die Aufgabe zugrunde, eine Doppelpedalsteuerung für Flurförderzeuge zu schaffen, die äußerst einfach aufgebaut ist und aus wenigen Teilen besteht und im Betrieb nahezu verschleißfrei arbeitet. Darüber hinaus soll sie gut an die räumlichen Verhältnisse in Flurförderzeugen angepaßt werden können.

Diese Aufgabe wird durch die Merkmale des Patentanspruchs 1 gelöst.

Bei der erfindungsgemäßen Pedalsteuerung wirkt jedes Pedal auf ein Hydraulikzylinder, wobei die Hydraulikzylinder hydraulisch gekoppelt sind. Eine Federanordnung sorgt dafür, daß die Pedale in nicht betätigtem Zustand in Nullstellung sind.

Bei der erfindungsgemäßen Pedalsteuerung sind die Pedale hydraulisch gekoppelt. Wird das eine Pedal betätigt, erfolgt eine Betätigung auch des anderen Pedals, so daß ein mit einem Pedal gekoppelter Signalgeber in unterschiedlichen Richtungen betätigt wird abhängig davon, welches der beiden Pedale heruntergedrückt wurde.

Eine hydraulische Kopplung der beiden Hydraulikzylinder kann zum Beispiel dadurch geschehen, daß die Hydraulikzylinder doppelt wirkend ausgeführt sind und zugekehrte Räume der Zylinder miteinander verbunden sind. Dadurch sind zwei Hydraulikkreise geschaffen in der Form, daß der Kolben des einen Zylinders zum Beispiel vom Pedal vom Fahrer fort bewegt wird, so daß der andere Kolben das andere Pedal auf den Fahrer zubewegt. Sind die Wirkungsflächen der Kolben auf beiden Kolbenseiten jeweils gleich groß, führt die Bewegung des einen Kolbens zu einer Bewegung des anderen Kolbens um die gleiche Wegstrecke. Eine geeignete Federeinrichtung sorgt dafür, daß bei nicht betätigten Pedalen diese in eine Neutralstellung überführt werden.

Nach einer anderen Ausgestaltung der Erfindung wird der Kolben der Hydraulikzylinder mit einer Feder beaufschlagt, die im unbelasteten Zustand den Kolben in einer mittleren Stellung hält. Eine zwischen den Endstellungen liegende mittlere Stellung erlaubt eine Verstellung des Hydraulikzylinders bzw. seines Kolbens zu beiden Richtungen.

Nach einer weiteren Ausgestaltung der Erfindung sind relativ starke Federelemente vorgesehen, beispielsweise Federpakete, welche die Pedale in die Nullstellung bewegen. Sind die Kolben der Hydraulikzylinder mit einer Feder beaufschlagt, ist die Federkraft der Federelemente auf jeden Fall deutlich höher zu wählen als für die der Federn in den Hydraulikzylindern. Vorzugsweise erfolgt die Betätigung der Hydraulikzylinder über die Federelemente, die mit den Hydraulikzylindern in Reihe liegen.

Nach einer weiteren Ausgestaltung der Erfindung können die Pedalhebel auf einer Schiene drehbar gelagert sein, an der auch die Hydraulikzylinder angebracht sind. Zwischen den Hydraulikzylindern ist vorzugsweise eine starre Hydraulikleitung angeordnet. Sie wird ebenfalls von der Schiene gehalten. Die Schiene kann nach einer weiteren Ausgestaltung der Erfindung L-Profil aufweisen, wobei an dem flachen Steg der Schiene Lagerböcke für die Pedalhebel angeordnet sein können, während am vertikalen Steg die Hydraulikzylinder befestigt sind.

Bei der Erfindung können kurzhubige Steuerzylinder verwendet werden, wie sie z.B. als Spannzylinder im Vorrichtungsbau angewendet werden. Die erfindungsgemäße Pedalsteuerung benötigt so gut wie keine mechanischen, aufwendig zu fertigenden Teile und verursacht daher keinen Verschleiß. Die erfindungsgemäße Pedalsteuerung ist auch raumsparend einsetzbar. Die Zylinder- und Federanordnung läßt sich beliebig im Bereich des Pedals anordnen. Die Verbindungsleitung, beispielsweise in Form eines Rohrs, kann dort verlegt werden, wo ausreichend Platz ist.

Die erfindungsgemäße Pedalsteuerung ermöglicht, die gesamte Pedalgruppe mit dem Rahmen zu verschrauben und ein ebenes Fußblech zu verwenden. Dadurch ergeben sich verbesserte Einstell-, Montage- und Wartungsmöglichkeiten.

Die Erfindung wird nachfolgend anhand von Zeichnungen näher erläutert.
- Fig. 1: zeigt perspektivisch die Pedalgruppe einer Pedalsteuerung nach der Erfindung.
- Fig. 2: zeigt die Vorderansicht der Pedalsteuerung einschließlich eines Bodenbleches.
- Fig. 3: zeigt die Seitenansicht der Anordnung nach Fig. 2 in Richtung Pfeil 3.
- Fig. 4: zeigt die Draufsicht auf die Anordnung nach Fig. 1.
- Fig. 5: zeigt schematisch einen Hydraulikplan für die in den Fig. 1 bis 4 dargestellte Pedalsteuerung.
- Fig. 6: zeigt einen ähnlichen Hydraulikplan wie Fig. 5, jedoch mit einer anderen Kopplung der Hydraulikzylinder.

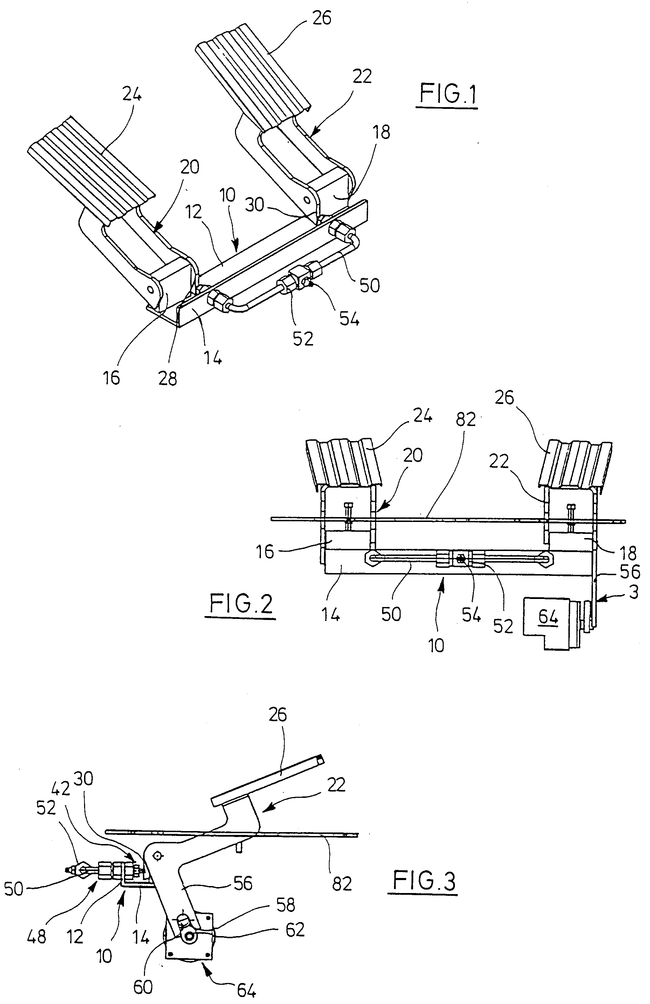

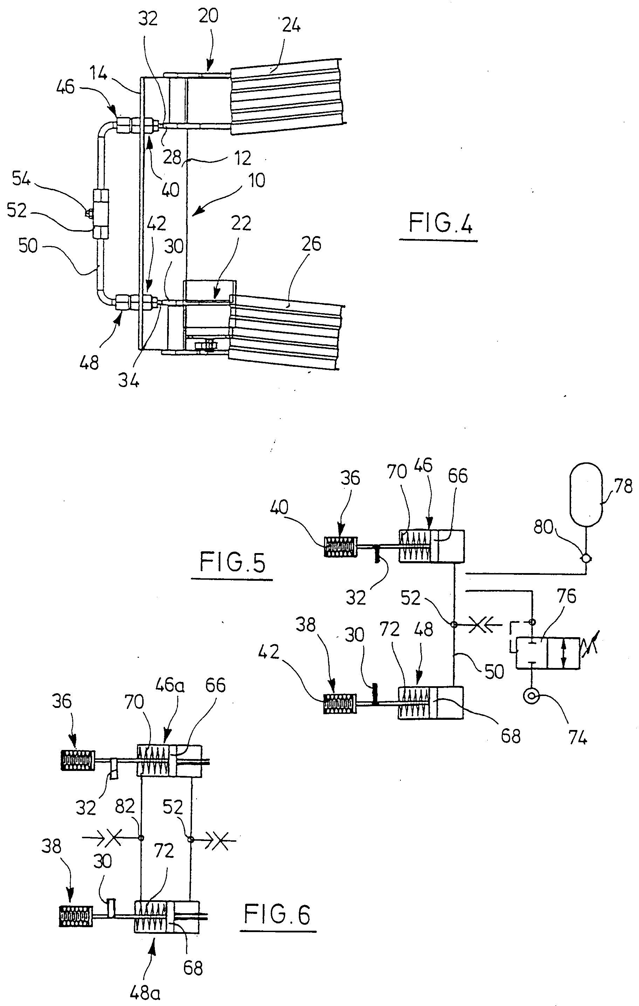

In den Fig. 1 bis 4 ist eine L-förmige Schiene 10 zu erkennen mit einem horizontalen Steg 12 und einem vertikalen Steg 14. Auf dem horizontalen Steg 12 sind zwei Lagerböcke 16, 18 angebracht für die Anlenkung von zweiarmigen Pedalhebeln 20, 22 um eine gemeinsame horizontale Achse. Der längere Arm der Pedalhebel 20, 22 weist eine Trittplatte 24 bzw. 26 auf. Die Pedalhebel 20, 22 sind im Querschnitt U-förmig mit nach unten weisendem Steg. Der kürzere Arm der Pedalhebel 20, 22 weist in Verlängerung eines Schenkels einen Ansatz 28 bzw. 30 auf. Der Ansatz 28 bzw. 30 wirkt mit einem Stift 32 bzw. 34 zusammen, der Teil eines Federelements ist, bei dem die Federwirkung von einem Tellerfederpaket gebildet ist. In Fig. 5 sind Federelemente 36 bzw. 38 dargestellt, die Tellerfederpakete 40 bzw. 42 enthalten. Die Federelemente 36, 38 sind durch eine Schraubbefestigung am vertikalen Steg 14 befestigt, und zwar ausgerichtet mit kurzhubigen Hydraulikzylindern 46, 48, die ebenfalls am Steg angeschraubt sind, die über eine gemeinsame Rohrleitung 50 gekoppelt sind. Ein T-Stück 52 in der Rohrleitung mit einem Nippel 54 dient zur Versorgung der Zylinder 46, 48 und der Leitung 50 mit einer geeigneten Hydraulikflüssigkeit.

Ein Schenkel des Pedalhebeis 22 weist eine Verlängerung des unteren Arms auf, die mit 56 bezeichnet ist (Fig. 2 und 3). Der Arm 56 weist am freien Ende einen Schlitz 58 auf, der mit dem Zapfen 60 einer Kurbel 62 eines Drehpotentiometers 64 gekoppelt ist.

Die Wirkungsweise der gezeigten Pedalsteuerung läßt sich anhand von Fig. 5 erklären. Die kurzhubigen Hydraulikzylinder 46, 48 weisen einen Kolben 66 bzw. 68 auf, der durch eine Feder 70 bzw. 72 so beaufschlagt ist, daß die Kolben 66, 68 annähernd eine mittige Stellung im Zylinder annehmen. Das System aus den Hydraulikzylindern 46, 48 und der Leitung 50 kann durch eine Hydraulikquelle 74 und über ein Ventil 76 mit Hydraulikmedium versorgt werden.

An die Leitung 50 ist auch ein Druckspeicher 78 über ein Rückschlagventil 80 anschließbar, um sicherzustellen, daß das beschriebene Hydrauliksystem stets mit Hydraulikflüssigkeit gefüllt ist.

Die Federelemente 36, 38, die relativ steif sind, halten die Pedale 24, 28 etwa auf gleicher Höhe, wenn kein Pedal heruntergedrückt wird. Wird nun ein Pedal durch Fußkraft eingefahren, beispielsweise Pedal 24, drückt das Hydraulikmedium über die Hydraulikzylinder 46, 48 das andere Pedal 26 gegen das Federelement um den gleichen Weg in die andere Richtung. Dadurch erfolgt eine Verstellung der Kurbel 60 gemäß Fig. 3 in Uhrzeigerrichtung. Wird der Fuß vom Pedal 24 genommen, drücken die gespannten Federelemente beide Pedale 24, 26 wieder in Nullstellung. Wird das Pedal 26 gedrückt, erfolgt eine Verstellung der Kurbel 60 des Potentiometers 64 entgegengesetzt der Uhrzeigerrichtung. Mit Hilfe der beschriebenen Pedalsteuerung läßt sich mithin das Fahrzeug vorwärts und rückwärts betreiben, indem entsprechende Fahrsignale erzeugt werden.

Das Ventil 76 ist als Druckregelventil ausgebildet, das mit der Fahrzeughydraulik verbunden ist. Ist der Leckölanfall zu groß, kann ein entsprechender Ausgleich erfolgen. Alternativ kann dies auch über den Druckspeicher 78 erfolgen.

Die beschriebene Pedalsteuerung nach den Fig. 1 bis 4 ist als Einheit ausgebildet und kann daher auch als Einheit am Rahmen des Fahrzeugs befestigt werden. Die Abdeckung kann dann durch ein normales flaches Fußblech 82 stattfinden, wie in den Fig. 2 und 3 angedeutet.

In Fig. 6 sind Hydraulikzylinder 46a, 48a als doppelt wirkende Zylinder ausgebildet, deren zugeordnete Druckräume miteinander verbunden sind. Eine Bewegung eines Kolbens, zum Beispiel des Kolbens 66, aufgrund einer Pedalverstellung führt daher zu einer gegenläufigen Bewegung des Kolbens 68 im anderen Hydraulikzylinder 48a. Die Wirkflächen der Kolben 66, 68 sind auf beiden Seiten gleich, wodurch die jeweils zurückgelegten Wegstrecken gleich sind.

Für die Auffüllung des Hydraulikmediums sind dann zwei Anschlüsse erforderlich, nämlich für jede der Leitungen, wie bei 52 bzw. 82 angedeutet. Eine Vorkehrung zur Kompensation von Lecköl ist bei den doppelt wirkenden Hydraulikzylindern 46a, 48a nicht erforderlich.

## Patentansprüche

1. Pedalsteuerung für ein Flurförderzeug, mit zwei gegenläufig gekoppelten Pedalen, wobei beim Herunterdrücken des einen Pedals ein Stellsignal für die Vorwärtsfahrt und beim Herunterdrücken des anderen Pedals ein Stellsignal für die Rückwärtsfahrt erzeugt wird, dadurch gekennzeichnet, daß jedes Pedal (24, 26) auf einen Hydraulikzylinder (46, 48) wirkt, die Hydraulikzylinder (46, 48) hydraulisch gekoppelt sind, ein Pedal (26) mit einem Stellsignalgeber (64) zusammenwirkt und eine Federanordnung (36, 38) vorgesehen ist, die die Pedale (24, 26) in nicht betätigtem Zustand in Nullstellung bringt.

2. Pedalsteuerung nach Anspruch 1, dadurch gekennzeichnet, daß zwei doppelt wirkende Hydraulikzylinder (46a, 48a) vorgesehen sind, von denen entsprechend zugeordnete Zylinderräume jeweils miteinander in Verbindung stehen.

3. Pedalsteuerung nach Anspruch 1, dadurch gekennzeichnet, daß die Kolben (66, 68) der Hydraulikzylinder (46, 48) mit einer Feder (70, 72) beaufschlagt sind, die im unbelasteten Zustand der Hydraulikzylinder die Kolben in einer zwischen den Endstellungen liegenden Zwischenstellung halten.

4. Pedalsteuerung nach einem der Ansprüch 1 bis 3, dadurch gekennzeichnet, daß die Pedale (24, 26) über relativ steife Federelemente (36, 38) in Nullstellung gehalten sind.

5. Pedalsteuerung nach Anspruch 4, dadurch gekennzeichnet, daß die Pedale (24, 26) über das Federelement (46, 48) auf die Hubzylinder (46, 48) wirken.

6. Pedalsteuerung nach Anspruch 4 oder 5, dadurch gekennzeichnet, daß das Federelement (36, 38) ein Tellerfederpaket (40, 42) enthält.

7. Pedalsteuerung nach einem der Ansprüche 1 bis 6, dadurch gekennzeichnet, daß die Pedale (24, 26) einen zweiarmigen Hebel (20, 22) aufweisen, deren von der Trittfläche (24, 26) abgewandte Arm auf den Hydraulikzylinder (46, 48) wirkt.

8. Pedalsteuerung nach Anspruch 7, dadurch gekennzeichnet, daß ein Pedalarm (56) nach unten verlängert ist und mit einem Signalgeber (64) zusammenwirkt.

9. Pedalsteuerung nach einem der Ansprüche 1 bis 8, dadurch gekennzeichnet, daß die Pedalhebel (22, 24) an einer Schiene (10) gelagert sind, an der die Hydraulikzylinder (46, 48) befestigt sind und die Hydraulikzylinder (46, 48) über eine starre Leitung (50) verbunden sind.

10. Pedalsteuerung nach Anspruch 9, dadurch gekennzeichnet, daß die Schiene (10) L-Profil aufweist, an deren horizontalem Steg (12) Lagerböcke (16, 18) für die Pedalhebel (20, 22) vorgesehen sind und an deren vertikalem Steg (14) die Hydraulikzylinder (46, 48) befestigt sind.

11. Pedalsteuerung nach Anspruch 6 und 10,dadurch gekennzeichnet, daß die Federelemente (36, 38) auf der den Pedalhebeln (20, 22) zugewandten Seite des vertikalen Steges (14) und die Hydraulikzylinder (46, 48) auf der entgegengesetzten Seite am vertikalen Steg (14) angeordnet sind.
